Europäisches Patentamt

European Patent Office

Office européen des brevets

(11) Veröffentlichungsnummer: **0 369 318**
**A2**

(12) **EUROPÄISCHE PATENTANMELDUNG**

(21) Anmeldenummer: **89120757.3**

(22) Anmeldetag: **09.11.89**

(51) Int. Cl.⁵: **A01B 3/28**

(30) Priorität: **12.11.88 DE 3838483**

(43) Veröffentlichungstag der Anmeldung:
**23.05.90 Patentblatt 90/21**

(84) Benannte Vertragsstaaten:
**AT BE DE FR GB NL**

(71) Anmelder: **Büttner, Hermann**
**Walkemühlenweg, 29**
**D-3400 Göttingen(DE)**

(72) Erfinder: **Büttner, Hermann**
**Walkemühlenweg, 29**
**D-3400 Göttingen(DE)**

(74) Vertreter: **Lins, Edgar, Dipl.-Phys. et al**
**Patentanwälte Gramm + Lins**
**Theodor-Heuss-Strasse 2**
**D-3300 Braunschweig(DE)**

(54) **Wendepflug.**

(57) Ein Wendepflug, dessen Baulänge nicht von seiner Arbeitsbreite abhängt und daher auch bei großer Breite kompakt baut, weist folgende Merkmale auf:
- einen Rahmen (1) bestehend aus einem Rahmenvorderteil (2) mit Ankoppelvorrichtungen (47, 48, 49) für ein Zugfahrzeug und wenigstens zwei etwa in Bewegungsrichtung zeigenden Längsstreben (3, 4, 5),
- einen Grindelbaum (8), der eine quer zur Fahrtrichtung liegende Längsachse aufweist und der an den Längsstreben (3, 5) des Rahmens (1) gelagert ist und
- Pflugkörper (9, 10), von denen die nach rechts wendenden (10) und die nach links wendenden (9) jeweils in einer Reihe nebeneinander am Grindelbaum um dessen Längsachse drehbar montiert sind, wobei die Pflugkörper (9, 10) beider Reihen auf verschiedenen Umfangswinkeln bezüglich des Grindelbaums (8) angeordnet sind.

Fig 1

## Wendepflug

Die Erfindung betrifft einen Wendepflug.

Wendepflüge sind bekannt. Sie weisen sowohl rechtswendende als linkswendende Pflugkörper auf, von denen sich die eine Sorte jeweils in der Arbeitsstellung und die andere Sorte in ihrer Ruhestellung befindet. Beim Wechsel der Fahrtrichtung wird die Sorte der in Arbeitsstellung befindlichen Pflugkörper gewechselt, so daß die Ablage des durch den Pflug gewendeten Bodens immer zur derselben Seite - unabhängig von der Fahrtrichtung -erfolgt.

Bei einem bekannten und sehr gebräuchlichen Wendepflug sind die links wendenden und rechts wendenden Pflugkörper um 180° zueinzueinander versetzt an einem Grindelbaum angebracht. Der Grindelbaum steht schräg zur Fahrtrichtung, so daß die Pflugkörper schräg hintereinander gestaffelt in den Boden greifen können. Der Grindelbaum bildet mit Hilfsverstrebungen ein Dreieck, das mit einer senkrecht zur Fahrtrichtung liegenden Strebe drehbar mit einem vorderen, am Zugfahrzeug angebrachten Rahmen verbunden ist, wobei die Drehachse mit der Fahrtrichtung zusammenfällt. Beim Wechsel der Fahrtrichtung findet eine Drehung um 180° um das Drehgelenk statt, wodurch der ursprünglich von vorne rechts nach hinten links ausgerichtete Grindelbaum nunmehr von vorne links nach hinten rechts zeigt bwz. umgekehrt. Ein derartiger Wendepflug weist erhebliche Nachteile auf, wenn große Abbeitsbreiten realisiert werden sollen, da diese mit einer großen Baulänge des Pfluges einhergehen. Hierdurch wird nicht nur der Wendepflug unhandlich sondern es entstehen auch Nachteile bei der Randbearbeitung der Felder.

Ein anderer bekannter Wendepflug der Firma Brenig besteht aus einem mittigen Längssteg, der an dem Zugfahrzeug angebracht wird. Am hinteren Ende des Längssteges sind beiderseitig Drehachsen vorgesehen, an denen eine Rahmenkonstruktion mit einem Grindelbaum befestigt ist. Der Grindelbaum ist etwa senkrecht zur Drehachse ausgerichtet und weist beispielsweise schräg gestaffelt hintereinander angeordnete Pflugkörper auf. Dabei befinden sich die links wendenden Pflugkörper links und die rechts wendenden Pflugkörper rechts von dem Mittelsteg. Durch Drehung der Drehachsen verschwenken die mit einem Längsende mit den Drehachsen verbundenen Grindelbäume um 180° um die Drehachse, so daß nur die auf einer Seite des Mittelstegs befindlichen Pflugkörper in ihrer Arbeitsstellung sind, während sich die anderen in ihrer Ruhestellung befinden. Auch bei diesem Pflug führt die Vergrößerung der Arbeitsbreite zwangsläufig zu einer Vergrößerung der Baulänge.

Ein Beetpflug mit einem kompakten Aufbau ist durch die EP 0 238 935 A2 bekannt. An einem quer zur Fahrtrichtung liegenden Grindelbaum sind dabei mehrere Pflugkörper angeordnet, so daß eine große Arbeitsbreite ohne eine Vergrößerung der Baulänge des Kurzpfluges ermöglicht wird. Die Arbeitsbereiche der nebeneinander angeordneten Pflugkörper können sich dabei überschneiden. Dieser bekannte Kurzpflug ist weder dazu vorgesehen noch geeignet als Wendepflug ausgebildet zu werden, da an eine Verschwenkung des langen Grindelbaumes mit Hilfe eines drehbar gelagerten Rahmens wegen der großen Länge des Grindelbaums nicht zu denken ist. Der Erfingung liegt die Aufgabe zugrunde, einen Wendepflug zu erstellen, der für große Arbeitsbreiten geeignet ist und eine kompakte Bauform ohne Vergrößerung der Baulänge bei einer Vergrößerung der Arbeitsbreite aufweist.

Diese aufgabe wird gelöst durch einen Wendepflug mit

- einem Rahmen bestehend aus einem Rahmenvorderteil mit Ankoppelvorrichtungen für ein Zugfahrzeug und wenigstens zwei etwa in Bewegungsrichtung zeigenden Längsstreben,
- einem Grindelbaum, der eine quer zur Fahrtrichtung liegende Längsachse aufweist und der an den Längsstreben des Rahmens gelagert ist und
- Pflugkörpern, von denen die nach rechts wendenden und die nach links wendenden jeweils in einer Reihe nebeneinander am Grindelbaum um dessen Längsachse drehbar montiert sind, wobei die Pflugkörper beider Reihen auf verschiedenen Umfangswinkeln bezüglich des Grindelbaums angeordnet sind.

Bei dem erfindungsgemäßen Wendepflug sind die Pflugkörper um die Längsachse des Grindelbaums selbst drehbar, so daß die Lage des Grindelbaums relativ zu einem Rahmen beim Wenden nicht verändert zu werden braucht. Die Pflugkörper der beiden verschiedenen Sorten werden durch Drehung um die Längsachse des Grindelbaums in ihrer Arbeits- bzw. Ruhestellung geschwenkt, wobei vorzugsweise der Grindelbaum selbst drehbar gelagert ist.

Die Pflugkörper sind vorzugsweise so angeordnet, daß beim Wechsel von der einen Pflugkörpersorte zur anderen der eine Pflugkörper aus seiner Ruhestellung in genau die Arbeitsstellung gelangt, die der andere Pflugkörper durch den Übergang in seine Ruhestellung gerade verlassen hat. Dieser Wechsel findet zweckmäßigerweise durch eine hydraulisch gesteuerte Drehung des Grindelbaums statt. Für ein exaktes Pflügen werden zweckmäßigerweise Seche vorgese hen, die sich beiderseits der Pflugkörper befinden, so daß immer eines der Sechen den Boden in der Nähe der wirksamen Pflugspitze einschneidet. Beim Wechsel der Pflugkörpersorte ändert sich die Lage der Pflugscharspitze, so daß dann dem an dieser Stelle wirksamen Pflugkörper das Sech auf der anderen Seite wirksam zugeordnet ist. Das Einschneiden des Bodens vor den Pflugspitzen ist für den erfindungsgemäßen Wendepflug von großer Bedeutung, weil aufgrund seiner kompakten Bauweise andernfalls die Gefahr einer Verstopfung bestehen würde. Da die Seche, vorzugsweise Scheibenseche, vor den Pflugspitzen angeordnet sind, ist es zweckmäßig, sie federnd zu lagern, wobei vorzugsweise die nach unten drückende Kraft beim Anheben der Seche abnimmt. Dadurch wird eine stabile und hohe Eindrückkraft für die Seche realisierbar, die beim Anheben der Seche durch ein Hindernis geringer wird und somit ein leichtes ausweichen trotz der hohen Eindrückkraft erlaubt.

Zweckmäßigerweise weisen die Längsstreben einen dem Abstand der Pflugkörper angepaßten Abstand auf. Die Seche befinden sich dann im Bereich unterhalb der Längsstreben.

Es ist besonders vorteilhaft, wenn die Pflugkörper so ausgebildet sind, daß sich ihre Schnittkante über die gesamte Breite des Pflugkörpers erstreckt. Wenn die Seche etwas außerhalb der Schnittkante des jeweiligen Pflugkörpers in den Boden schneiden, hat jeder Pflugkörper eine etwas größere Arbeitsbreite als seine tatsächliche Breite ist. Eine hierfür geeignete Pflugkörperform sieht einen nur geringen Winkel mit der Fahrtrichtung bildendes Vorderschar und einen wesentlich größeren Winkel mit der Fahrtrichtung bildendes Hinterschar vor. Das Streifblech erstreckt sich dabei seitlich nicht über die genannten Pflugschare hinaus, wobei ggf. an sich bekannte Rückholfinger vorgesehen sein können, die die Krümmung des Streifbleches innerhalb der Breite der Pflugschare fortsetzen.

Der Pflugwechsel geschieht vorzugsweise mit einem zwischen Rahmenvorderteil und einem Ansatz an dem drehbar gelagerten Grindelbaum angeordneten Wendezylinder, der in zwei Arbeitsstellungen mit unterschiedlichen Winkelstellungen des Grindelbaums verriegelbar ist. Die Steuerung für den Wechsel der Pflugkörper nach Änderung der Fahrtkörper läßt sich besonders einfach ausbilden, wenn die Pflugkörper der beiden Reihen bezüglich des Grindelbaums einen Umfangswinkel von deutlich weniger als 180°, vorzugsweise etwa 120°, einschließen.

Fährt der Schlepper in der Furche des vorhergehenden Pflügvorganges, soll die damit verbundene Schrägstellung des Schleppers tunlichst nicht auf den Pflug übertragen werden. Dies läßt sich dadurch vermeiden, daß in Abhängigkeit von der Winkelstellung des Grindelbaums ein Steuergestänge zwei Wellen mit je einer Auskröpfung im Rahmenvorderteil dreht, wobei sich die Ankoppelvorrichtungen an den Auskröpfungen befinden. Die Auskröpfungen werden so gedreht, daß beim links wendenden Pflug die linke Auskröpfung nach unten und die rechte Auskröpfung nach oben zeigt, wodurch die links nach unten weisenden Schrägstellung des Schleppers ausgeglichen wird. Beim Wechsel der Fahrtrichtung werden die beiden Wellen mit den Auskröpfungen gegensinnig so umgestellt, daß die entsprechend umgekehrte Schrägstellung kompensiert wird.

Die Längsstreben des Rahmens erstrecken sich vorzugsweise über den Grindelbaum hinaus nach hinten und sind dort mit einer die Längsstreben verbindenden Traverse abgeschlossen, die Abkoppelvorrichtungen für Zusatzgeräte tragen kann. Mit einem weiteren Steuergestänge kann eine Parallelogrammführung der Ankoppelvorrichtungen in Abhängigkeit der Winkelstellung des Grindelbaums seitlich verschwenkt werden, so daß beispielsweise eine Krimelgerät nicht mittig hinter dem Rahmen nachgezogen wird, sondern seitlich versetzt zu der Seite, zu der die Ablage des gewendeten Bodenstreifens erfolgt.

Vorzugsweise ist am Rahmen eine dritte Längsstrebe vorgesehen, die etwa horizontal mittig zwischen den beiden anderen Längsstreben geführt ist.

Vorzugsweise sind am Rahmen somit drei Längsstreben vorgesehen, die etwa in Höhe der Ankoppelvorrichtungen für eine Dreipunktankopplung mit dem Rahmenvorderteil verbunden sind und vorzugsweise am hinteren Ende durch eine gemeinsame Traverse miteinander verbunden sind. Dies hat zur Folge, daß die seitlichen Längstraversen schräg von unten nach oben ansteigend verlaufen, wenn die mittlere Längsstrebe etwa horizontal verläuft. Zur Erleichterung der Bewegung der Pflugkörper aus der Arbeitsstellung in seine Ruhestellung bzw. umgekehrt ist es zweckmäßig, wenn wenigstens eine Längsstrebe seitlich abgekröpft ist, um so den Platz für den Durchtritt des Pflugkörpers zu schaffen.

Die Pflugkörper können mit einer Steinsicherung an dem zugehörigen Grindelbaum befestigt sein. Die Steinsicherung wird durch eine federnde Aufhängung der Pflugkörper erreicht, durch die der Pflugkörper nach oben ausweichen kann, wenn er auf unnachgiebiges Hindernis stößt. Dadurch wird eine Beschädigung des Pfluges vermieden. Damit eine Bewegung schräg nach oben einsetzt, muß der Anlenkungspunkt des Pflugkörpers weit vor der Pflugscharspitze liegen. Eine derartige Anordnung ist bei der erfindungsgemäßen Ausbildung des Wendepfluges ersichtlich nicht möglich.

Erfindungsgemäß ist daher die Steinsicherung mit einer Parallelogrammankopplung der Pflugkörper an einer lotrecht stehenden Basis am Grindelbaum realisiert. Von dieser Basis ragen zwei Lenker etwa parallel zueinander schräg nach hinten und sind über eine gekrümmte, mit ihren Enden in Zugrichtung zeigende Blattfeder miteinander verbunden, wobei die Blattfeder vorzugsweise am oberen der Lenker drehbar gelagert ist und mit ihrem unteren Ende mit dem Pflugstiel des am unteren Lenker angelenkten Pflugkörpers verbunden ist. Die gekrümmte Blattfeder vermindert ihre Krümmung, wenn der Pflugkörper gegen einen Stein läuft und verlängert sich dadurch. Durch die entsprechende Änderung der Parallelogrammführung wandert der scheinbare Drehpunkt weit nach vorn, so daß ein schnelles Ausheben des Pflugkörpers nach oben möglich ist.

Erfindungsgemäß ist daher die Steinsicherung mit einer Parallelogrammankopplung der Pflugkörper an einer lotrecht stehenden Basis am Grindelbaum realisiert. Von dieser Basis ragen zwei Lenker etwa parallel zueinander schräg nach hinten und sind durch den oberen Teil eines Pflugstiels des betreffenden Pflugkörpers verbunden. Der obere der Lenker wird vorzugsweise durch eine Zugfeder in Richtung auf das untere Ende der Basis gegen einen Anschlag gezogen. Vorzugsweise ist der obere Teil des Pflugstiels durch eine gekrümmte, mit ihren Enden in Zugrichtung zeigende Blattfeder gebildet, wobei die Blattfeder vorzugsweise am oberen der Lenker drehbar gelagert ist und mit ihrem Ende mit dem Pflugstiel verbunden ist. Die gekrümmte Blattfeder vermindert ihre Krümmung, wenn der Pflugkörper gegen einen Stein läuft und verlängert sich dadurch. Durch die entsprechende Änderung der Parallelogrammführung wandert der scheinbare Drehpunkt von etwas hinter dem Pflugkörper nach vorn vor dem Pflugkörper, so daß ein schnelles Ausheben des Pflugkörpers nach oben und hinten möglich ist. Eine lagesichere Befestigung der Blattfeder am Pflugstiel wird dadurch erreicht, daß das Ende der Blattfeder in eine Tasche des Pflugstiels eingeschoben ist und oberhalb der Tasche zwischen zwei Exenterbolzen geführt wird.

Die Erfindung soll im folgenden anhand von in der Zeichnung dargestellten Ausführungsbeispielen erläutert werden. Es zeigen:

Figur 1 - eine Seitenansicht eines Wendepfluges mit angehängten weiteren Bearbeitungsgeräten mit einem links wendenden Pflugkörper in der Arbeitsstellung

Figur 2 - die Anordnung gemäß Figur 1 mit einem rechts wendenden Pflugkörper in der Arbeitsstellung

Figur 3 - eine Draufsicht auf die Anordnung gemäß Figur 1

Figur 4 - eine Vorderansicht des Rahmenvorderteils für links wendende Pflugkörper in Arbeitsstellung

Figur 5 - die Ansicht gemäß Figur 4 für rechts wendende Pflugkörper in der Arbeitsstellung

Figur 6 - eine Darstellung verschiedener Steueranordnungen im Bereich des Grindelbaums

Figur 7 - eine Detailansicht der Steueranordnungen am hinteren Ende des Rahmens

Figur 8 - eine Ansicht von hinten auf die Ankopplung eines Pflugkörpers an den Grindelbaum

Figur 9 eine Seitenansicht der Anordnung gemäß Figur 8 mit einem schematisch angedeuteten Pflugkörper

Figur 10 die Anordnung gemäß Figur 9 in der angehobenen Stellung vor dem Absenken in die Arbeitsstellung

Figur 11 - eine Draufsicht auf einen geeignet geformten Pflugkörper

Figur 12 - eine Vorderansicht des Pflugkörpers gemäß Figur 11.

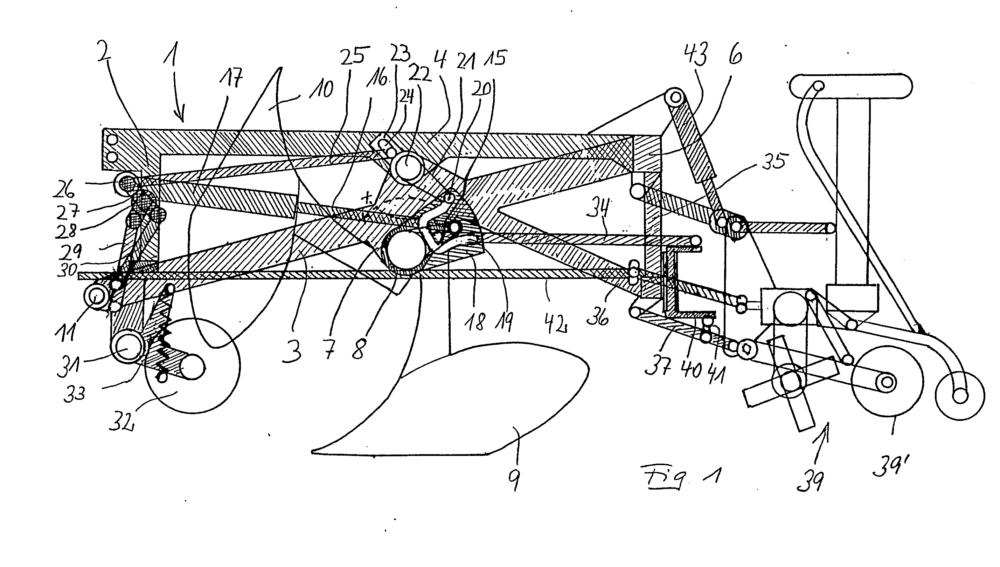

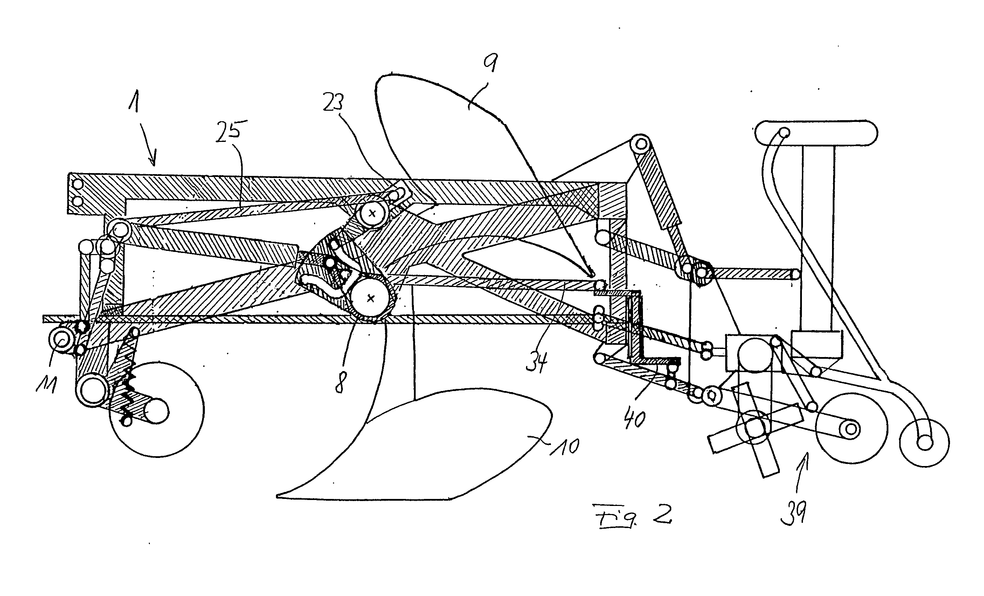

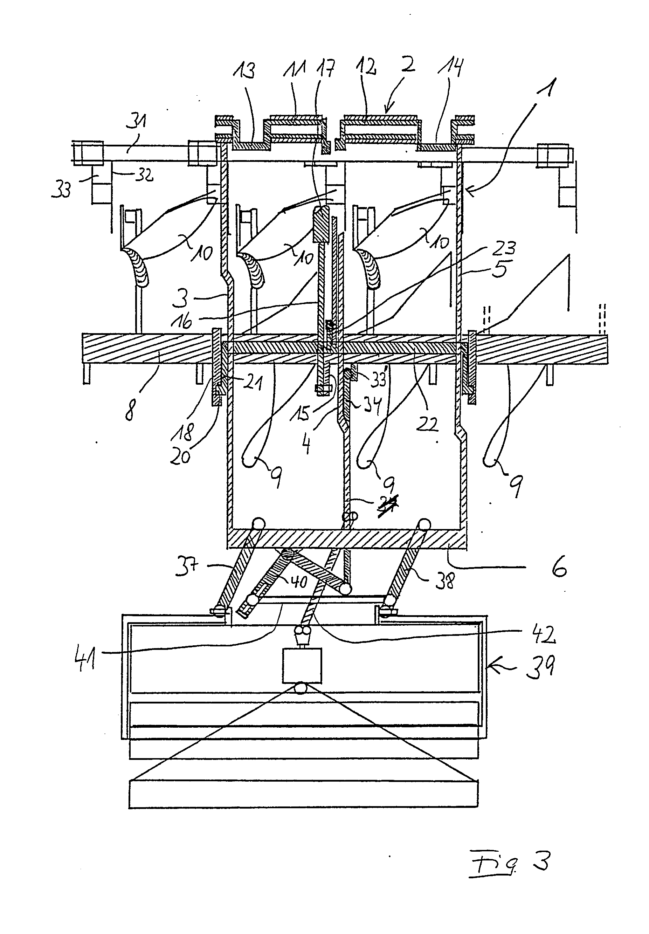

Der grundsätzliche Aufbau des dargestellten Wendepfluges soll zunächst anhand der Figuren 1 und 3 erläutert werden. Tragendes Element für die Gesamtanordnung ist ein Rahmen 1, der aus einem Rahmenvorderteil 2 sowie aus drei vom Rahmenvorderteil 2 senkrecht nach hinten erstreckten Längsstreben 3, 4, 5 besteht. Die mittlere Längsstrebe 4 erstreckt sich von der Oberseite des Rahmenvorderteils 2 etwa horizontal nach hinten und mündet in eine senkrecht zur Längsstrebe 4 stehende Traverse 6. Die auf beiden Seiten der mittleren Längsstrebe 4 angeordneten Längsstreben 3 und 5 erstrecken sich vom unteren Bereich des Rahmenvorderteils 2 schräg nach oben verlaufend zur Traverse 6, die somit die drei Längsstreben 3, 4, 5 an ihren Enden miteinander verbindet. Die beiden äußeren Längsstreben 3, 5 weisen etwa in der Mitte ihrer Länge Ansätze 7 auf, die ein Lager für einen drehbaren Grindelbaum 8 bilden. Der drehbar gelagerte Grindelbaum 8 trägt links wendende Pflugkörper 9 und rechts wendende Pflugkörper 10. Die links wendenden Pflugkörper 9 bilden eine erste Reihe, die rechts wendenden Pflugkörper 10 ein zweite Reihe nebeneinander angeordneter Pflugkörper, wobei sich jeweils ein rechts drehender Pflugkörper 10 und ein links wendender Pflugkörper 9 an derselben axialen Stelle des Grindelbaums 8 befinden, jedoch um eine radialen Winkel vom etwa 120° zueinander versetzt sind.

In Figur 1 ist ein links wendender Pflugkörper 9 in Arbeitsstellung und ein rechts wendender Pflugkörper 10 in einer nach vorne angehobenen Ruhestellung dargestellt.

Figur 3 läßt erkennen, daß die seitlichen Längsstreben 3, 5 zwei Kippwellen 11, 12 lagern, die nach hinten weisende Auskröpfungen 13, 14 aufweisen. Die Kippwellen 11, 12 befinden sich im unteren Bereich des Rahmenvorderteils 2, dessen Oberteil in Figur 3 der Übersichtlichkeit halber weggebrochen ist.

Der Grindelbaum 8 weist einen Ansatz 15 auf, an den eine Zylinderstange 16 eines Wendezylinders 17 angelenkt ist. Die Winkelstellung des Grindelbaums 8 ist somit durch den Wendezylinder 17 einstellbar. Außerhalb des Rahmens 1 befinden sich seitlich von äußeren Längsstreben 3, 5 zwei weitere Ansätze 18 auf dem Grindelbaum 8, die eine Steuerkurve 19 aufweisen, in die eine Nase 20 eines Verriegelungshebels 21 angreift, der um eine Verriegelungswelle 22 drehbar ist. Mit der Verriegelungswelle 22 ist etwa diametral dem Verriegelungshebel 21 gegenüberliegend etwa in der Mitte des Rahmens 1 ein Steuerhebel 23 verbunden, der ein Langloch 24 aufweist. Über das Langloch 24 ist eine Steuerstange 25 mit einem Zapfen 26 eines am Rahmenvorderteil gelagerten Hebels 27 gelenkig verbunden, der um ein Drehlager 28 schwenkbar ist. Das dem Zapfen 26 gegenüberliegende Ende des Hebels 27 ist gegabelt. An ihm greifen zwei Kipplenker 29, 30 an, deren andere Enden die Winkelstellung der beiden Kippwellen 11, 12 steuern. Unterhalb der Kippwelle 11 ist am Rahmenvorderteil ein Sechträger 31 gelagert, an dem Scheibenseche 32 an federnden Hebeln 33 gelagert sind. Die federnden Hebel erlauben dem Scheibensech 32, nach oben auszuweichen, wenn es auf einen Stein o. dgl. trifft, so daß eine Zerstörung vermieden wird.

Der Grindelbaum weist etwa in der Rahmenmitte einen weiteren, nach hinten gerichteten Ansatz 33 auf, mit dem eine nach hinten ragende Schwenkstange 34 gelenkig verbunden ist. Die Schwenkstange 34 ragt durch ein hinteres Rahmenabschlußteil 35 hindurch, das sich unterhalb der Traverse 6 befindet und sich mit Hilfe zweier Verbindungsstreben 36 an den Längsstreben 3 abstützt. Am hinteren Rahmenteil 35 ist eine Parallelogrammführung bestehend aus zwei Lenkern 37, 38 für Zusatzgeräte 39 befestigt. Mit einem der Lenker 38 der Parallelogrammführung ist ein an dem hinteren Rahmenteil 35 gelagerter Kniehebel 40 über eine Lenker 41 verbunden. Der Lenker 41 ist in einem Langloch eines Schenkels des Kniehebels 40 befestigt. An dessen anderem Schenkel greift die Schwenkstange 34 an, die somit in Abhängigkeit von der Winkelstellung des Grindelbaums 8 die Zusatzgeräte 39 über den Kniehebel 40, den Lenker 41 und die beiden, eine Parallelogrammführung bildenden Lenker 37, 38 auf die Seite außerhalb der Mitte des Rahmens 1 verschwenkt, auf die die Pflugkörper (9, 10) den geschnittenen Erdstreifen ablegen.

Figur 1 läßt noch erkennen, daß eine Durchtriebswelle 42 durch den Rahmen 1 hindurchgeführt ist, um einen rotierenden Antrieb für das Zusatzgerät 39 zur Verfügung zu stellen. In Figur 3 ist nur das hintere gelenkig abgewinkelte Teil der Durchtriebswelle 42 dargestellt.

Mit Hilfe eines Hydraulikzylinders 43 kann das Zusatzgerät in eine wirksame und eine unwirksame Stellung verfahren und die Pflugtiefe über eine auf der Scholle laufende Krümelwalze (39') eingestellt werden. Fehlt das Zusatzgerät, erfolgt die Einstellung der Pflugtiefe über die Schlepperhydraulik.

Figur 2 zeigt die Anordnung gemäß Figur 1, bei der der rechts wendende Pflugkörper 10 in seine wirksame Stellung und der links wendende Pflugkörper 9 in seine Ruhestellung verfahren ist. Die entsprechende Umsteuerung ist durch Einziehen der Kolbenstange 16 des Wendezylinders 17 erfolgt. Der Regelhebel 21 ist in der im wesentlichen U-förmigen Steuerkurve 19 an das andere Ende gelaufen. Das Umlegen des Kipphebels 23 hat eine Umsteuerung der Kippwellen 11, 12 zur Folge, wie noch erläutert werden wird. Durch das Drehen des Grindelbaums 8 ist die Schwenkstange 34 eingezogen worden, so daß durch den Kniehebel 40 das Zusatzgerät 39 auf die in Fahrrichtung gesehen rechte Seite des Rahmens 1 verschwenkt worden ist, da auf diese Seite nunmehr die Schollen mittels des rechts wendenden Pflugkerpers 10 abgelegt werden.

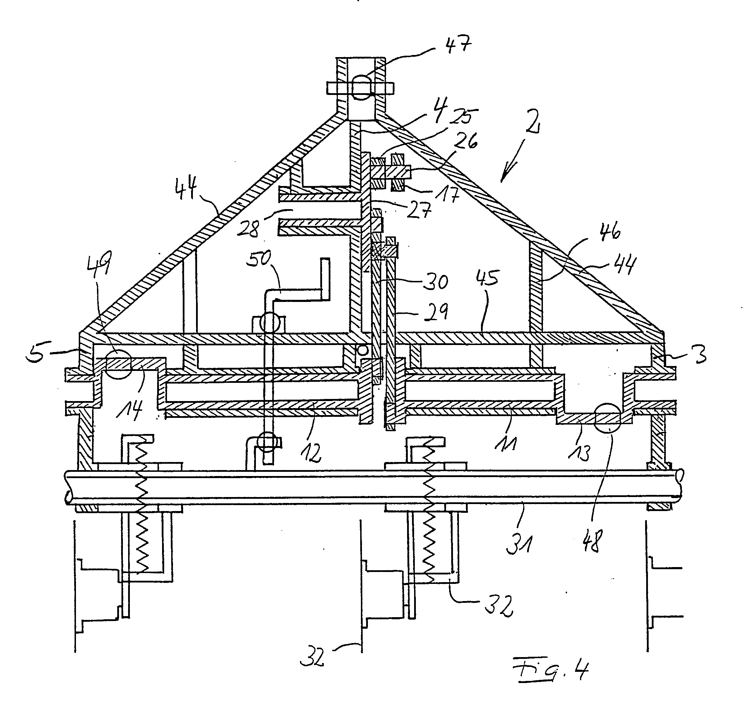

Figur 4 läßt eine Vorderansicht des Rahmenvorderteils 2 erkennen, wobei von einer Arbeitsstellung der links wendenden Pflugkörper 9 ausgegangen wird. Die seitlichen Längsstreben 3, 5 sind mit der mittleren Längsstrebe 4 durch dreieckförmige Verstrebungen 44, horizontalen Querstreben 45 und vertikalen Verbindungsstreben 46 verbunden.

Die Steuerstange 25 dreht den Hebel 27 um sein Lager 28 und betätigt die Kipplenker 29, 30, die damit die Kippwellen 11, 12 drehen, so daß eine Auskröpfung 13 nach unten und die andere Auskröpfung 14 nach oben zeigt.

Figur 4 läßt die drei Ankoppelvorrichtungen 47, 48, 49 erkennen, die zur Verbindung mit einer Dreipunkt-Abkopplung eines Schleppers vorgesehen sind. Die in Figur 4 dargestellte Stellung der Kippwellen 11, 12 ist für links wendende Pflugkörper 9 vorgesehen, wenn der Schlepper in der Furche fährt. Der Schlepper neigt sich somit in Fahrtrichtung nach links, was der rechten Seite der Figur 4 entspricht. Die Auskröpfung 13 zeigt nach unten, so daß der Rahmen auf dieser Seite gegenüber dem Schlepper nach oben gehoben ist, während auf der anderen Seite die Auskröpfung 14 den Rahmen relativ zum Schlepper nach unten hält. Die Neigung des Treckers nach links wird somit ausgeglichen. Je nach Bearbeitungstiefe läßt sich die Neigungskompensation durch Verstellen der Anlenkung der Steuerstange 25 in dem Langloch 24 (vgl. Figur 1) einstellen.

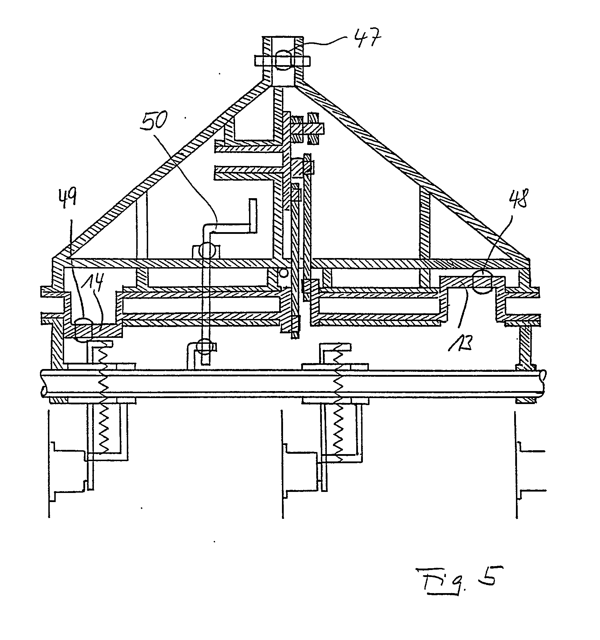

Figur 5 zeigt die gleiche Ansicht wie in Figur 4, lediglich für den Fall, daß der Schlepper in einer rechten Furche fährt, weil die rechts wendenden Pflugkörper 10 arbeiten.

Die Figuren 4 und 5 lassen noch eine Handspindel 50 erkennen, mit deren Hilfe die Schnittiefe der Scheibenseche 32 einstellbar ist.

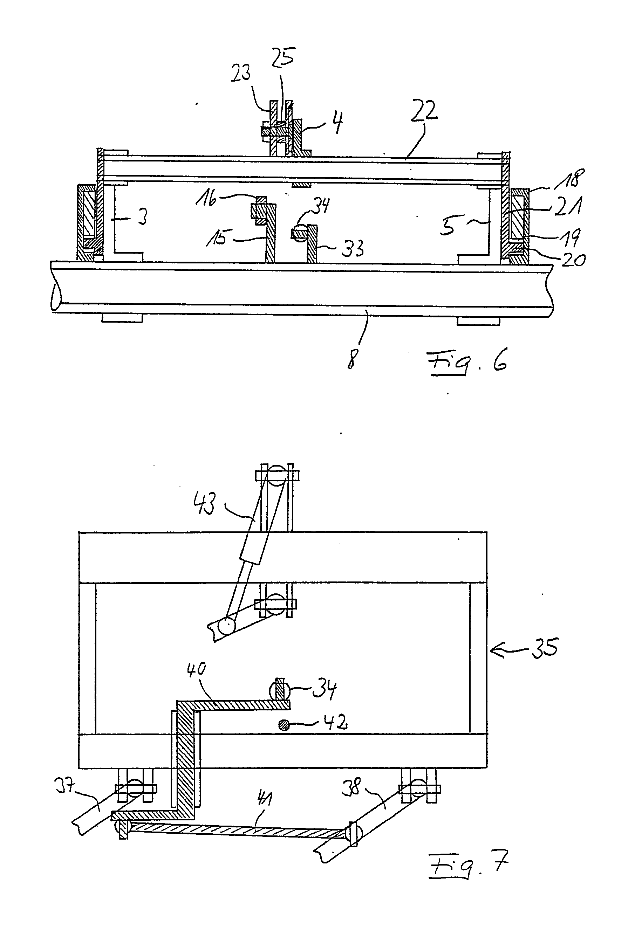

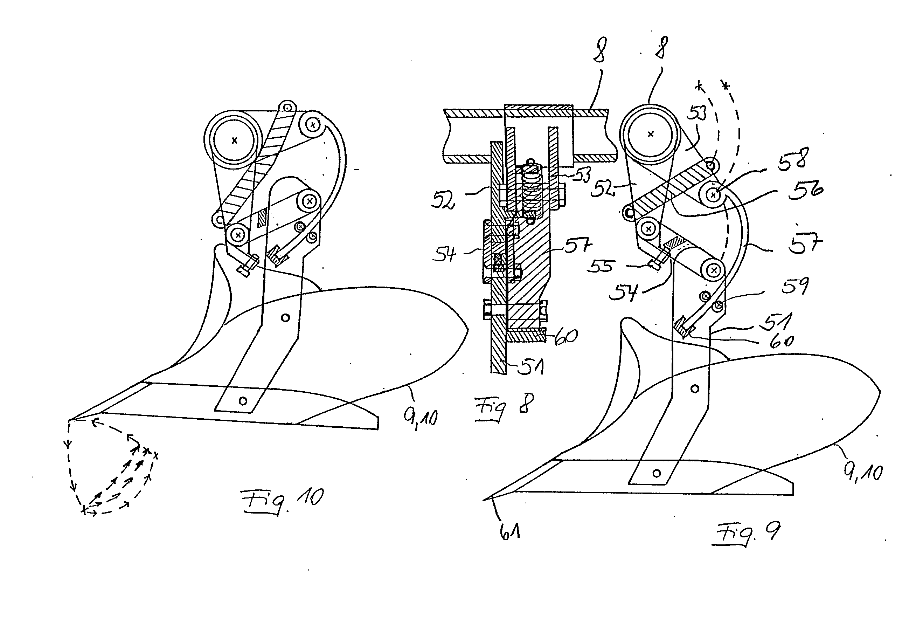

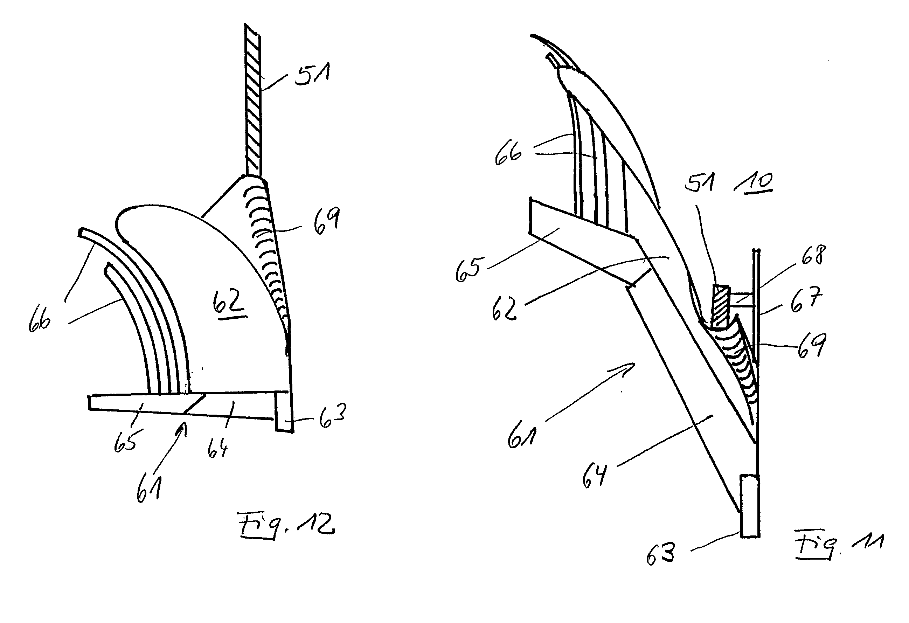

Figur 6 verdeutlicht in vergrößerter Darstellung die räumliche Zuordnung des Grindelbaums 8 zu der Riegelwelle 22 mit den Rie- Riegelhebeln 21 und den in die Steuerkurve 19 eingreifenden Nasen 20. Ferner sind die die Riegelwelle tragenden Längsstreben 3, 4, 5 sowie die verriegelnde Steuerstange 25 und der Riegelhebel 23 erkennbar. Ferner sind die Ansätze 15 und 33 erkennbar, die mit der Kolbenstange 16 des Wendezylinders 17 bzw. der Schwenkstange 34 zum seitlichen Verschwenken der Hebel 37, 38 der Parallelführung mittels des Kniehebels 40 und der Steuerstange 41 zusammenwirken. (Figur 7) Die Figuren 8 bis 10 verdeutlichen den Aufbau einer Steinsicherung für die Pflugkörper 9, 10. Die Pflugkörper 9, 10 weisen jeweils einen nach oben ragenden Pflugstiel 51 auf. Die Anlenkung des Pflugstiels 51 an dem Grindelbaum 8 erfolgt über eine lotrecht stehende Basis 52, von der sich zwei Lenker 53, 54 etwa parallel zueinander schräg nach hinten unten erstrecken. Mit dem unteren Lenker 54 ist der Pflugstiel 51 gelenkig verbunden. Die maximale Winkelstellung des unteren Lenkers 54 relativ zur Basis 52 wird durch einen einstellbaren Anschlag 55 begrenzt. Zwischen der Basis 52 und dem oberen Lenker 53 ist eine rückstellende Zugfeder 56 angeordnet, die den Lenker 53 in Richtung auf die Basis 52 zieht. Der obere Lenker 53 ist mit dem Pflugstiel 51 über eine Blattfeder 57 verbunden, die ihrerseits mit einem Drehgelenk 58 am oberen Lenker 53 montiert ist. Die beiden Enden der Blattfeder 57 zeigen in Fahrtrichtung nach vorn. Die Blattfeder 57 ist am Pflugstiel 51 zwischen zwei einstellbaren Führungsexenter 59 geführt und an ihrem Ende in eine Aufnahmetasche 60 eingesteckt.

Die beschriebene Anordnung ermöglicht eine rasche Bewegung des Pflugkörpers nach oben, obwohl die durch den Grindelbaum 8 festgelegte Drehachse oberhalb des Pflugkörpers 9, 10 und nicht - wie bei einer Steinsicherung nach dem Stand der Technik - vor dem Pflugkörper 9, 10 angeordnet ist. Stößt die Pflugscharspitze 61 gegen einen Stein oder ein ähnliches Hindernis, wird die Krümmung der Blattfeder 57 durch die relative Bewegung des Pflugkörpers 9, 10 gegenüber der Basis 52 verringert. Dadurch vergrößert sich der Abstand zwischen den beiden freien Enden der Lenker 53, 54, und der virtuelle Drehpunkt wandert vor den Pflugkörper 9, 10, so daß der Pflugkörper 9, 10 nicht nur kippen, sondern auch durch eine Bewegung nach oben dem Hindernis ausweichen kann. Je nach Hindernis kann die Bewegung der Pflugscharspitze 61 variabel er erfolgen, wie dies in Figur 10 angedeutet ist. Die Rückstellung erfolgt durch die Entspannung der Federn 56, 57 in ihre Ausgangsstellung, wobei sich der Pflugkörper 9, 10 unter großer Entlastung der Federkräfte selbst in den Boden eingräbt, wenn die Lenker 53, 54 nicht genau parallel sondern nach hinten etwas zusammenlaufen, so daß keine exakte Parallelogrammführung gegeben ist. Dadurch ist bei entspannter Blattfeder 57 der virtuelle Drehpunkt hinter den Pflugkörper 9, 10 gewandert.

Die Figuren 11 und 12 verdeutlichen eine geeignete und bevorzugte Ausbildung eines rechts wendenden Pflugkörpers 10. Dieser besteht im wesentlichen aus dem Pflugstiel 51, an dem ein Pflugschar 61 und ein nach rechts wendendes Streichblech 62 befestigt sind.

Das Pflugschar besteht aus einer Pflugspitze 63, die im wesentlichen in Fahrtrichtung ausgerichtet ist, einem einen relativ kleinen Winkel zur Fahrtrichtung aufweisenden Vorderschar 64 und einem einen größeren Winkel mit der Fahrtrichtung bildenden Hinterschar 65. Oberhalb des Hinterschars 65 befinden sich Rückholstäbe 66, die im wesentlichen die Krümmung des Streichbleches 62 fortsetzen.

Die Zeichnung läßt erkennen, daß der Pflugstiel 51 - aus der Fahrtrichtung gesehen - seitlich zur Mitte versetzt von der Pflugspitze 63 angeordnet ist, so daß er hinter dem Vorderschar 64 steht. Ausgehend von dem Streichblech 62 verläuft ein Gleitblech 69 mit einer balligen Wölbung von der Seitenkante des Pflugkörpers 10 zum Pflugstiel 51. Das ballig gewölbte und schräg zur Wenderichtung verlaufende Gleitblech 69 vermindert wesentlich die Verstopfungsneigung des Pflugkörpers 10 durch Pflanzenreste. Es hat sich gezeigt, daß durch Schrägstellung des Gleitbleches 69 häufig auf eine bisher übliche Reinigungseinrichtung für die Vorderkante des Pflugkörpers 10 verzichtet werden kann.

Die Pflugspitze 63 definiert den Schneidrand des Pflugkörpers 10. Mit ihre fluchtet - in Fahrtrichtung dahinter angeordnet - ein Anlageblech 67, das einen kleinen Winkel zur Fahrtrichtung bildet, dessen Größe mit Hilfe einer nur schematisch angedeuteten Verstelleinrichtung 68 einstellbar ist. Der Winkel des Anlagebleches 67 dient dazu, mit dem Anlageblech 67 durch das Wenden der Scholle mit dem Pflugkörper 10 auftretende Seitenkräfte zu kompensieren, so daß der Pflugkörper 10 gradlinig in Fahrtrichtung geführt wird.

**Ansprüche**

1. Wendepflug mit
- einem Rahmen (1) bestehend aus einem Rahmenvorderteil (2) mit Ankoppelvorrichtungen (47,48,49) für ein Zugfahrzeug und wenigstens zwei etwa in Bewegungsrichtung zeigenden Längsstreben (3,4,5),

- einem Grindelbaum (8), der eine quer zur Fahrtrichtung liegende Längsachse aufweist und der an den Längsstreben (3,5) des Rahmens (1) gelagert ist und

- Pflugkörpern (9,10), von denen die nach rechts wendenden (10) und die nach links wendenden (9) jeweils in einer Reihe nebeneinander am Grindelbaum um dessen Längsachse drehbar montiert sind, wobei die Pflugkörper (9,10) beider Reihen auf verschiedenen Umfangswinkeln bezüglich des Grindelbaums (8) angeordnet sind.

2. Wendepflug nach Anspruch 1, bei dem der Grindelbaum (8) selbst um seine Längsachse drehbar ist.

3. Wendepflug nach Anspruch 1 oder 2, dadurch gekennzeichnet, daß die Pflugkörper (9,10) beider Reihen an axial gleichen Stellen des Grindelbaums (8) angeordnet sind.

4. Wendepflug nach Anspruch 3 mit den Pflugkörpern (9,10) zugeordneten Sechen (32), die mit geringem Abstand beiderseits der Pflugkörper (9,10) angeordnet und am Rahmen (1) in vertikaler Richtung federnd gelagert sind.

5. Wendepflug nach Anspruch 4, wobei die die Seche (32) nach unten drückende Kraft beim Anheben der Seche (32) abnimmt.

6. Wendepflug nach einem der Ansprüche 1 bis 4 mit Pflugkörpern (9,10), deren Schnittkante sich über die gesamte Breite der Pflugkörper (9,10) erstreckt.

7. Wendepflug nach Anspruch 6, bei dem die Schnittkante der Pflugkörper (9,10) in Draufsicht von einer Pflugspitze (63) ausgehend mit einem Vorderschar (64) einen kleinen Winkel zur Fahrtrichtung bildet und sich auf einem Hinterschar (65) fortsetzt, das einen größeren Winkel mit der Fahrtrichtung bildet.

8. Wendepflug nach einem der Ansprüche 1 bis 7, mit einem Wendezylinder (17) zwischen Rahmenvorderteil (2) und einem Ansatz (15) am drehbar gelagerten Grindelbaum (8), der in zwei Arbeitsstellungen mit unterschiedlichen Winkelstellungen des Grindelbaums (8) verriegelbar ist.

9. Wendepflug nach einem der Ansprüche 1 bis 8 mit einem Steuergestänge (25-30), das in Abhängigkeit von der Winkelstellung des Grindelbaums (8) zwei Wellen (11,12) mit je einer Auskröpfung (13,14) im Rahmenvorderteil gegensinnig dreht, wobei sich die Ankoppelvorrichtungen (48,49) an den Auskröpfungen (13,14) befinden.

10. Wendepflug nach einem der Ansprüche 1 bis 9 mit einer dritten Längsstrebe (4), die etwa horizontal mittig zwischen den beiden anderen Längsstreben (3,5) geführt ist.

11. Wendepflug nach Anspruch 10, bei dem die drei Längsstreben (3,4,5) etwa von den Ankoppelvorrichtungen (47,48,49) für eine Dreipunktankopplung am Rahmenvorderteil (2) ausgehend in Fahrtrichtung hinter dem Grindelbaum (8) durch eine gemeinsame Traverse (6) miteinander verbunden sind, an der eine Parallelogrammführung (37,38) in Abhängigkeit von der Winkelstellung des Grindelbaums (8) durch ein weiteres Steuergestänge (34,40,41) seitlich verschwenkbar ist.

12. Wendepflug nach einem der Ansprüche 1 bis 11 mit einer an einer etwa lotrecht stehenden Basis (52) realisierten Parallelogrammankopplung (53,54,57) der Pflugkörper (9,10) an dem Grindelbaum (8), wobei die Verbindung zweier etwa parallel zueinander stehender, von der lotrechten Basis (52) ausgehender Lenker (53,54) durch den oberen Teil eines Pflugstiels (51) des Pflugkörpers (9,10) erfolgt und eine Zugfeder (56) den oberen Lenker (53,54) in Richtung auf das untere Ende der Basis zieht.

13. Wendepflug nach Anspruch 12, bei dem das obere Ende des Pflugstiels (51) durch eine gekrümmte, mit ihren Enden in Zugrichtung zeigende Blattfeder (57) gebildet ist, die Blattfeder (57) am oberen Lenker (53) drehbar befestigt und mit ihrem unteren, in Zugrichtung nach vorn zeigenden Ende mit dem drehbar an dem unteren Lenker (54) befestigten Pflugstiel (51) des Pflugkörpers (9,10) dadurch verbunden ist, daß das Ende der Blattfeder (57) in eine Tasche (60) des Pflugstiels (51) eingeschoben und oberhalb der Tasche (60) zwischen zwei Exzenterbolzen (59) gelagert ist.

Fig 1

Fig 2

Fig. 3

Fig. 4

Fig. 5

Fig. 6

Fig. 7

Fig. 8

Fig. 9

Fig. 10

51

69

66

62

66

65

64

63

61

*Fig. 12*

66

51 10

65

68

62

67

61

69

64

63

*Fig. 11*

EP 0 369 318 A2